# EUROPÄISCHE PATENTSCHRIFT

(11) **EP 1 535 506 B1**
(45) Veröffentlichungstag und Bekanntmachung des Hinweises auf die Patenterteilung: **21.03.2007**
(21) Anmeldenummer: 03078767.5
(22) Anmeldetag: 28.11.2003
(51) Int. Cl.: A01F 15/08

(54) **Feuchte-Messeeinrichtung und -Verfahren**
Moisture measuring device and process
Dispositif et procédé de mesure de l'humidité

(43) Veröffentlichungstag der Anmeldung: 01.06.2005
(73) Patentinhaber: Lely Enterprises AG, 6300 ZUG (CH)
(72) Erfinder: Platon, Günter, 38321 Klein Denkte (DE); Ramm, Christoph, 38124 Braunschweig (DE); Lühr, Dr. agr. sc. Kord H., 38302 Wolfenbüttel (DE)
(74) Vertreter: Corten, Maurice Jean F.M.

(56) Entgegenhaltungen:
- EP-A- 0 843 959
- EP-A- 0 960 557
- DE-A- 3 232 746
- DE-A- 10 204 941

## Beschreibung

Die Erfindung betrifft eine Messeinrichtung zur Messung des Feuchtegehaltes von landwirtschaftlichen Erntegütern wie Heu, Stroh oder Anwelksilage mit einem Feuchte-Sensorelement und wenigstens einem weiteren Sensorelement zur Erfassung anderer Materialeigenschaften.
Die Erfindung betrifft ferner ein Verfahren zur Messung von Eigenschaften eines Messgutes in einer Messeinrichtung.

Sowohl für die Gewinnung von hochwertigem Qualitätsfutter als auch für dessen Verwertung, beispielsweise in Futtermischwagen, ist die genaue Kenntnis des Feuchtegehaltes bzw. der Trockenmasse des Futters von entscheidender Bedeutung. Trotz jahrzehntelanger Entwicklungsarbeiten ist es bisher noch nicht gelungen, eine Feuchtemesseinrichtung für verdichtbare Halmgüter zu schaffen, die die Anforderungen an die Genauigkeit der Messung zu wirtschaftlich vertretbaren Kosten erfüllt.

Das Problem besteht darin, dass sich bei einem konstanten, angenommenen Messvolumen eines verdichtbaren Halmgutes (z.B. Vorwelkgras) die Verhältnisse von Luft, Wasser zu Trockenmasse hauptsächlich in Abhängigkeit von der Verdichtung sehr stark ändern. Das hat zur Folge, dass beispielsweise bestimmte Messeinrichtungen hoch verdichtetes Messgut als zu nass messen.

Um den Einfluss der unterschiedlichen Materialdichten auszuschalten, wird in der DE 23 03 109 A, der DE 199 59 117 A1 und der DE 102 04 941 A1 vorgeschlagen, das Messgut im Zustand möglichst konstanter Dichte zu messen. Dadurch sind die Messstellen in einer landwirtschaftlichen Erntemaschine und der Anwendungsbereich sehr stark eingeschränkt, weil sich praktisch nur am verdichteten Ballen oder an der Einlaufstelle des Materials in den Pressraum einer variablen Rundballenpresse messen lässt. Grundsätzlich besteht aber der Nachteil, dass sich ein kontinuierlich konstanter Pressdruck an der Messstelle aufgrund schwankender Materialzufuhr über Höhe und Breite der Zuführöffnung gar nicht erreichen lässt. Das hat relativ ungenaue Messwerte dieser FeuchteMesseinrichtung zur Folge.

Aus der EP 0 843 959 A1 ist eine Messvorrichtung in einer landwirtschaftlichen Maschine mit einem Mikrowellensensor bekannt. Die Feuchtigkeit des stehenden oder bewegten Erntegutes in der Maschine soll durch Ermittlung der Dämpfung bestimmter Frequenzen ermittelt werden. Ein weiteres Verfahren zur Messung der Materialfeuchte eines Messgutes mit Hilfe von Mikrowellen ist durch die EP 0 468 023 B1 bekannt. Hierbei soll durch eine Auswertung der Mikrowellensignale eine dichteunabhängige Messung der Feuchtewerte möglich sein. Es soll die durch die feuchte Masse bewirkte Verschiebung der Resonanzfrequenz eines Resonators bestimmt werden. Dieses Verfahren eignet sich für relativ homogene Materialien wie Tabak, Kaffee, Marzipan, Käse oder ähnliche Materialien. Derartige Messeinrichtungen sind bis heute zumindest in Ballenpressen für landwirtschaftliche Halmgüter über das Versuchsstadium nicht hinausgekommen. Einerseits sind diese Messeinrichtungen sehr teuer und liegen im Bereich der Maschinenkosten, beispielsweise einer Rundballenpresse, in der sie eingesetzt werden sollen. Andererseits sind diese Messeinrichtungen mehr für den Laborbetrieb und stationäre Produktionsprozesse ausgelegt. Der Hauptgrund dürfte jedoch darin liegen, dass sich die Messgenauigkeit für die sehr inhomogenen Halmgüter wie Stroh, Heu, Gras, Klee auch nur über genaue Kalibrierungen darstellen lässt.

In der DE 32 32 746 A1 ist eine Feuchtemesseinrichtung an einer Erntemaschine dargestellt und beschrieben, die in Kombination mit einer Einrichtung zur Messung der Erntegut-Durchlaufmenge dazu verwendet wird, um dem unverdichteten Erntegut ein Konservierungsmittel in Abhängigkeit von dem gemessenen Feuchtewert und der gemessenen Durchlaufmenge zuzuteilen. Der Niederhalter der Aufsammelvorrichtung soll mit Messelektroden zur Feuchtemessung versehen sein und als Fühler für die Messung des Erntegutdurchsatzes ausgebildet sein.

Eine genaue Ermittlung des Feuchtegehaltes ist nicht möglich, weil die Dichte bzw. Anpresskraft des an den Messelektroden anliegenden Erntegutes nicht gemessen und folglich auch nicht als Korrekturfaktor für den Feuchtegehalt berücksichtigt wird. Da der Niederhalter zur Messung der Durchlaufmenge des Erntegutes ausweichbar ist, kann der Niederhalter das Erntegut nicht verdichten, was auch gar nicht die Aufgabe des Niederhalters ist.

Der Erfindung liegt die Aufgabe zugrunde, die eingangs beschriebene Messeinrichtung zu verbessern.

Diese Aufgabe wird gelöst durch eine Einrichtung mit den im Anspruch 1 angegebenen Merkmalen und durch ein Verfahren mit den im Anspruch 22 angegebenen Merkmalen. Vorteilhafte Weiterbildungen der Erfindung sind Gegenstand der abhängigen Ansprüche.

Durch die erfindungsgemäße Kombination der Messung des Feuchtegehaltes mit der laufenden Messung der Anpresskraft des Messgutes spielen Änderungen in der Verdichtung des Messgutes keine Rolle mehr. Die Messstelle ist somit nicht mehr vom Messverfahren vorgegeben, sondern so wählbar, wie es für das gewünschte Messergebnis am günstigsten ist. Die Messung der Anpresskraft ist mit geringem Aufwand möglich und stellt auf einfachste Weise ein Maß für die Dichte des Messgutes dar. Hierbei ist es wesentlich, dass die Dichte des Messgutes nicht als Absolutwert gemessen wird und häufig auch gar nicht messbar ist, weil kein Messvolumen exakt definierbar ist. Nach dem erfindungsgemäßen Verfahren ergeben sich durch gleichzeitiges Messen von Feuchterohwert und Anpresskraft Wertepaare, aus denen sich tatsächliche Feuchtewerte mit hoher Genauigkeit auf messtechnisch einfache Weise ableiten lassen.

Eine baulich und konstruktiv einfache Ausführungsform wird dadurch erreicht, dass das Sensorelement ein Kraft-Sensor ist, auf dem sich das Feuchte-Sensorelement abstützt. So lassen sich Feuchte-Messsignale und Anpresskraft-Messsignale automatisch gleichzeitig und ohne Verfälschung direkt aufnehmen. Ein weiterer Vorteil besteht in der Verwendung von Standard-Messaufnehmern.

Da sehr große Luftanteile bzw. Lufteinschlüsse des Messgutes, wie beispielsweise beim gerade aufgenommenen, relativ lockeren Schwad das Messergebnis bei bestimmten Feuchtesensoren verfälschen können, wird in weiterer Gestaltung der Erfindung vorgeschlagen, dass das Messgut mit wenigstens einer Presseinrichtung mit zusätzlicher Kraft direkt oder indirekt auf das Feuchte-Sensorelement gedrückt und verdichtet wird. Dabei kann die Presseinrichtung eine Pressplatte, eine Presswalze und/oder einen Pressrechen umfassen nach Art eines Pick-up Niederhalters.

Vorzugsweise sind die Sensorelemente in einem einer Pick-up Trommel nachgeschalteten Zuführkanal angeordnet. Dadurch kann das Messgut laufend und frühestmöglich gemessen werden, um in Abhängigkeit von gemessenen Parametern z.B. die Zugabe von Konservierungsmitteln zu regeln.

Gemäß einem weiteren Merkmal der Erfindung ist vorgesehen, dass die Sensorelemente mit einer Steuereinheit in Wirkverbindung stehen, welche als Mensch-Maschine Schnittstelle wenigstens ein Display für den Feuchtegehalt des Messgutes aufweist. Die Steuereinheit weist dabei wenigstens einen Speicher mit wenigstens einer Kalibrierfläche zum Zuordnen der Messwertpaare von Feuchte und Kraft zu einem kalibrierten Feuchtemesswert auf.

Ein weiterer großer Vorteil dieser Einrichtung besteht auch darin, dass die Steuereinheit keine Signale des Feuchte-Sensorelementes unterhalb eines vorbestimmten Kraftmesswertes des Sensorelementes auswertet, so dass auch erkennbar ist, ob sich Messgut im Messbereich des FeuchteSensor befindet oder nicht. Vorbestimmte Kraftmesswerte sind deshalb notwendig, weil unterhalb einer bestimmten Dichte eines Materials keine eindeutige Zuordnung der Feuchte-Messwerte zu den Kraft-Messwerten möglich ist. Darüber hinaus entfallen zusätzliche Einrichtungen wie Lichtschranken, Vibrationssensoren oder ähnliche Einrichtungen, welche erfassen, ob Erntegut durch die Maschine läuft oder nicht und beispielsweise am Vorgewende die Messelektronik ausschalten, weil kein Material zugeführt wird.

Als Feuchte-Sensorelement bietet sich für diese Einsatzfälle vorzugsweise ein kapazitiver Feuchtesensor an, der ein einfaches Messprinzip aufweist, einfach handhabbar ist und eine hohe Messgenauigkeit besitzt. Verwendbar sind jedoch auch Feuchtesensoren, die nach dem Mikrowellenverfahren arbeiten. Diese erfordern jedoch das Wissen eines Mikrowellenspezialisten, weil das Mikrowellenmessverfahren eine sehr komplizierte und kostenintensive Messmethode ist.

Das erfindungsgemäße Verfahren lässt sich in einfacher Weise dadurch realisieren, dass der tatsächliche Feuchtegehalt mittels einer Kalibrierfläche festgestellt wird, welche aus gemessenen und errechneten Feuchterohwerten zwischen den gemessenen besteht. Auf diese Art und Weise lässt sich mit relativ wenigen Kalibrierungen eine hinreichend genaue Kalibrierfläche im gewünschten Feuchtebereich darstellen.

In weiterer Ausgestaltung des Verfahrens ist vorgesehen, dass bei der Kalibrierflächenerstellung einem bekannten Feuchtegehaltswert des Messgutes Wertepaare zugeordnet werden, bestehend aus dem mit dem Feuchtesensor gemessenen Feuchterohwert und dem mit dem Kraftsensor gemessenen Anpresskraftwert. Das Messverfahren ist durchschaubar und weder zeit- noch kostenintensiv. Zur Kalibrierflächenerstellung werden einige Materialproben jeweils im Bereich von minimaler bis maximaler Feuchte genommen. Anschließend wird jede Materialprobe mit unterschiedlichen Kräften komprimiert und dabei jeweils ein Feuchterohwert gemessen, woraus sich eine Feuchte-Rohwertkalibrierkurve in Abhängigkeit von der Presskraft ergibt, der dann über Trockenschrankmessung der Proben der tatsächliche Feuchtewert zugeordnet wird.

In der Zeichnung sind einige als Beispiel dienende Ausführungsformen der Erfindung dargestellt und nachstehend näher erläutert. Es zeigen:
Fig. 1 eine schematische Seitenansicht einer Rundballenpresse mit einer erfindungsgemäßen Messeinrichtung,
Fig. 2 eine Draufsicht auf die Messeinrichtung gemäß Fig. 1 in Blickrichtung der Pfeile A, wobei nur der mittlere Bereich des Förderkanals dargestellt ist,
Fig. 3 eine Teilseitenansicht auf den vorderen Teil einer Rundballenpresse mit einer zweiten Ausführungsform einer Messeinrichtung,
Fig. 4 einen horizontalen Schnitt durch ein in einer Seitenwand einer Rundballenpresse angeordnetes Feuchte-Sensorelement in Kombination mit einem Anpresskraft-Sensorelement,
Fig. 5 und 6 eine Ansicht nach Figur 4, jedoch mit anderen Ausführungsformen und
Fig. 7 beispielhaft eine Kalibrierfläche im dreidimensionalen Raum, der durch die Achsen von gemessenen Anpresskraftwerten und gemessenen Feuchtegehaltsrohwerten in der Ebene und tatsächlicher Feuchte nach Laborversuchen auf der Hochachse aufgespannt wird.

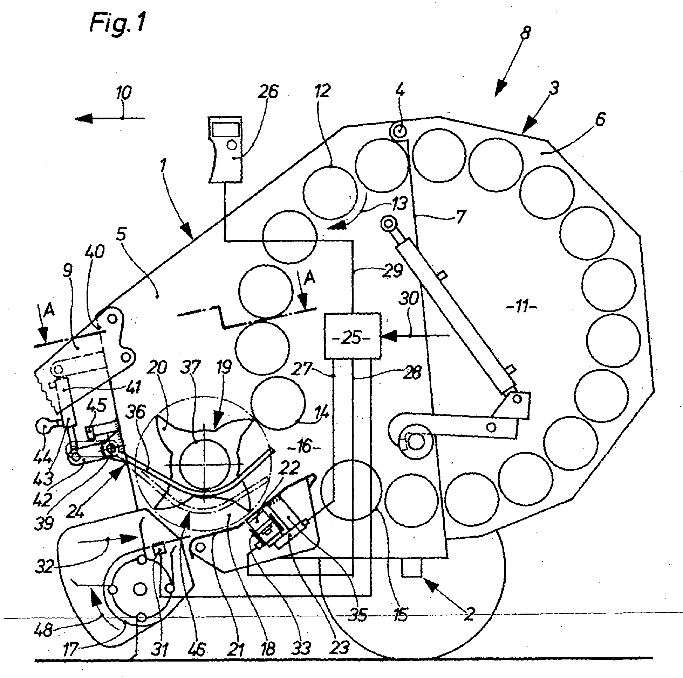

Die in Fig. 1 dargestellte Rundballenpresse besitzt ein zweiteiliges Pressraumgehäuse, bestehend aus einem Vordergehäuse 1, welches gestellfest auf einem Fahrgestell 2 ruht und einem Hintergehäuse 3, welches nach Formung eines Ballens um eine horizontale obere Schwenkachse 4 zum Ballenausstoß in eine Entladestellung aufklappbar ist.

Das Vordergehäuse 1 weist zwei Seitenwände 5 auf, die durch Querverbindungen miteinander verbunden sind. Das Hintergehäuse 3 besitzt zwei Seitenwände 6. Diese liegen mit einer Vorderkante 7 in geschlossener Stellung 8 an den Seitenwänden 5 des Vordergehäuses 1 an. Am Vordergehäuse 1 greift ein Zugglied 9 an zur Verbindung mit einem nicht dargestellten Schlepper, welcher die Rundballenpresse in Richtung des Pfeiles 10 über das Feld zieht.

Im Pressraumgehäuse wird ein Pressraum 11 gebildet, der in diesem Ausführungsbeispiel einen konstanten Durchmesser besitzt oder auch einen variablen Pressraumdurchmesser haben kann. Der Pressraum 11 wird umfangsseitig von rotierend antreibbaren Presselementen begrenzt, die in diesem Ausführungsbeispiel in den Seitenwänden 5, 6 gelagerte Presswalzen 12 sind, aber auch von Riemen, Stabkettenförderern oder Kombinationen davon gebildet werden können. Die gemeinsame Umlaufrichtung der Presswalzen 12 ist durch Pfeil 13 gekennzeichnet.

Zwischen einer Presswalze 14 und einer Boden-Presswalze 15 ist eine Zuführöffnung 16 für Halmgut freigelassen. Das in Schwaden auf dem Boden liegende Halmgut wird mittels einer Pick-up Trommel 17 aufgenommen und durch einen Förderkanal 18 sowie durch die Zuführöffnung 16 in den Pressraum 11 gefördert. Der Förderkanal 18 wird nach oben durch einen Förderrotor 19 begrenzt, der auf dem Umfang mit Abstand zueinander verteilte Förderzinken 20 aufweist. Nach unten wird der Förderkanal 18 durch einen Förderkanalboden 21 abgeschlossen. Der Förderkanalboden 21 ist in Form einer leicht nach unten abgeknickten Blechplatte ausgebildet, die sich von der Presswalze 15 bis zur Pick-up Trommel 17 erstreckt.

Der Förderkanalboden 21 kann, wie hier nicht dargestellt, in der Blechplatte nebeneinander angeordnete Langlochschlitze aufweisen, durch die Schneidmesser hindurchgreifen, die in ihrer in den Förderkanal 18 geschwenkten Schneidstellung mit dem Förderrotor 19 ein Schneidwerk bilden.

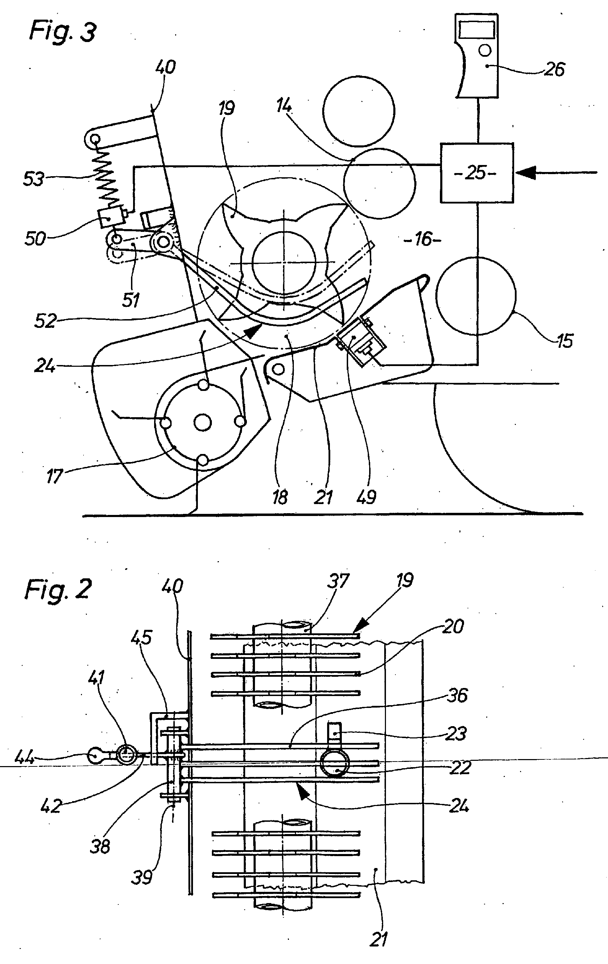

Neu ist eine Messeinrichtung für den Feuchtegehalt des aufgenommenen Halmgutes. Die Messeinrichtung besteht im Wesentlichen aus fünf Komponenten, wie am besten aus den Figuren 1 und 2 ersichtlich:
- einem im Förderkanalboden 21 angeordneten Feuchtesensor 22, wie beispielsweise eine kapazitive Feuchtesonde,
- einem Anpresskraftsensor 23, auf dem sich der Feuchtesensor 22 abstützt,
- einer Presseinrichtung 24 mit Presszinken 36, welche das Halmgut mit vorbestimmbarer Kraft auf den Feuchtesensor 22 drücken,
- einer Steuereinheit 25 mit geeigneter Mikroprozessorsteuerung zur Eingabe, Verarbeitung und Ausgabe von Daten und einer
- Mensch-Maschine Schnittstelle 26, wie beispielsweise Bediengerät mit Tastatur und Display.

Die Komponenten stehen über geeignete Leitungen 27, 28, 29 in Wirkverbindung und erhalten ihre Energieversorgung beispielsweise vom Schlepper.

Bestimmte Materialien und/oder Materialstrukturen können eine zusätzliche Beeinflussung der ermittelten Werte erforderlich machen. Diese Beeinflussung (Korrektur) kann durch manuelle Vorgabe am Bediengerät 26 oder an der Steuereinheit 25, siehe Pfeil 30, oder automatisch durch einen Gutartsensor 31 erfolgen, der auf bestimmte Materialeigenschaften ausgelegt ist und dem Feuchtesensor 22 in Gutflussrichtung vorgeschaltet hinter der Umlaufbahn der Pick-up Trommel 17 angeordnet ist.

Nachstehend sind die einzelnen Komponenten näher beschrieben:

Der Feuchtesensor 22 ist unterhalb des Förderrotors 19 in Gutflussrichtung 32 nach hinten versetzt angeordnet, so dass die Förderzinken 20 das Material in gleichmäßigen Portionen über den Feuchtesensor 22 schieben. Da auch bei ungleichmäßiger seitlicher Beschickung der Rundballenpresse immer Material in Schwadmitte liegt, ist der Feuchtesensor 22 bezüglich der Förderkanalbreite mittig im Förderkanalboden 21 angeordnet, wie am besten aus Figur 2 ersichtlich.

Der Feuchtesensor 22 durchdringt von unten eine dem Sensorquerschnitt angepasste Öffnung im Förderkanalboden 21. Eine sensitive Fläche des Feuchtesensors 22 schließt bündig mit der Oberkante des Förderkanalbodens 21 ab. Der Feuchtesensor 22 ist höhenverschiebbar in der Öffnung gelagert und in einer topfartigen Halterung 33 befestigt. Die topfartige Halterung 33 ist an dem Kraftsensor 23 befestigt.

Der Kraftsensor 23 ist mittels einer Konsole 35 fest mit dem Förderkanalboden 21 verbunden. Der Kraftsensor 23 ist so ausgelegt, dass er nur Kräfte aufnimmt, die senkrecht zu seiner Oberfläche wirken, nicht aber Querkräfte, die aus der Schubwirkung des Förderrotors 19 resultieren.

Im Bereich des Feuchtesensors 22 greifen von vorn oben drei in Seitenansicht gesehen V-förmige Presszinken 36 unterhalb des Tragrohres 37 der Förderzinken 20 und zwischen benachbarten Förderzinken 20 in den Förderkanal 18 ein, welche das Halmgut mit zusätzlicher Kraft fingerartig auf den Feuchtesensor 22 drücken und als Presseinrichtung 24 dienen. Der mittlere Abschnitt des Förderrotors 19 oberhalb des Feuchtesensors 22 ist in Figur 2 übersichtshalber nicht gezeichnet. Die Presszinken 36 sind an einem Querrohr 38 befestigt und um eine quer zur Fahrtrichtung 10 gelegene Drehachse 39 schwenkbar am Gestell 40 gelagert. Die Presszinken 36 erstrecken sich in Gutflussrichtung 32 bis hinter den Feuchtesensor 22. Ein am Gestell 40 angelenkter Hydrozylinder 41 ist kolbenstangenseitig mit einem Hebelarm 42 verbunden, der an das Querrohr 38 geschweißt ist. An den kolbenstangenseitigen Zylinderraum 43 des Hydrozylinders 41 ist ein Hydrospeicher 44 angeschlossen, welcher die Presszinken 36 in der in Strichpunktlinie gezeichneten, durch Anschlag 45 begrenzten Betriebsstellung 46 mit Vorspannung hält und bei Bedarf mit weitgehend konstanter Kraft nach oben ausweichen lässt.

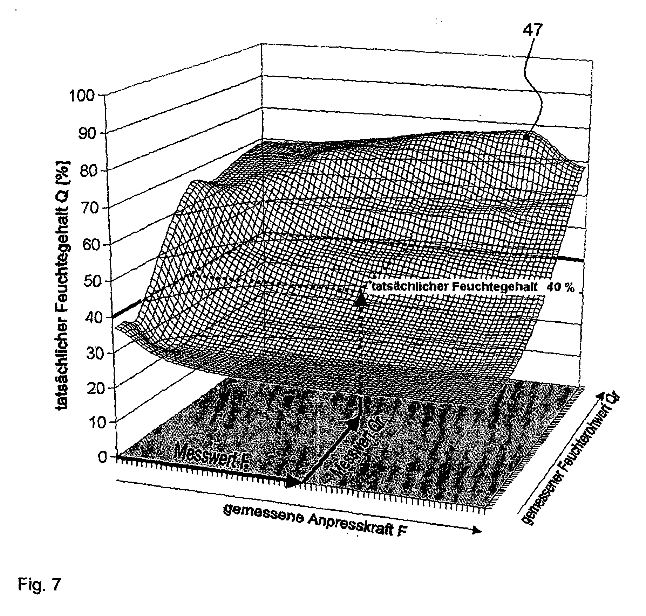

In der Steuereinheit 25 ist wenigstens eine in Figur 7 beispielhaft für Vorwelkgras dargestellte Kalibrierfläche 47 hinterlegt.

Die Kalibrierfläche 47 ist materialabhängig. Zur Kalibrierflächenerstellung werden in Versuchen Materialproben gleicher Feuchte mit unterschiedlichen Kräften komprimiert und dabei jeweils zugehörige Feuchterohwerte gemessen. Daraus ergibt sich eine Feuchte-Rohwertkalibrierkurve in Abhängigkeit von der Presskraft, der dann über Trockenschrankmessung der Proben tatsächliche Feuchtewerte zugeordnet werden. Die Kalibrierfläche 47 ergibt sich dann durch Zuordnung des tatsächlichen Feuchtewertes zum gemessenen Feuchterohwert Qr und zum gemessenen Anpresskraftwert F im dreidimensionalen Raum, der durch diese drei Werte aufgespannt wird. Um mit wenigen Labormessungen auszukommen, wird die Kalibrierfläche 47 aus gemessenen und errechneten Feuchtewerten zwischen den gemessenen erstellt.

Die dargestellte Aufsammel-Rundballenpresse wird von einem Schlepper auf dem Feld über einen Halmgutschwad gezogen, welcher von der sich in Pfeilrichtung 48 drehenden Pick-up Trommel 17 aufgenommen und mittels des Förderrotors 19 durch die Zuführöffnung 16 in den Pressraum 11 gefördert wird. Dabei wird das Material durch die Presszinken 36 mit zusätzlicher Kraft gegen den Feuchtesensor 22 gedrückt. Die Presskraft ist einstellbar und abhängig vom Material bzw. der Materialstruktur. Während der Halmgutförderung nehmen der Feuchtesensor 22 und der Anpresskraftsensor 23 laufend gleichzeitig Messsignale auf und melden diese an die Steuereinheit 25. Die Auswerteelektronik der Steuereinheit 25 vergleicht die gemessenen Anpresskraftsignale mit einem vorgegebenen Soll-Anpresskraftwert. Bei Unterschreitung dieses Soll-Anpresskraftwertes erfolgt keine weitere Auswertung dieser gemessenen Anpresskraftwerte. Die den Soll-Anpresskraftwert überschreitenden Anpresskraftwerte werden mit den zugehörigen Feuchterohwerten zu Wertepaaren kombiniert. Mittels dieser gemessenen Wertepaare

(F, Qr), siehe Figur 7, wird in der Kalibrierfläche 47 der tatsächliche Feuchtegehalt Q des Halmgutes ermittelt, siehe Hochachse Fig. 7 und nach Durchführung einer Mittelwertbildung aus allen Q beispielsweise am Ende des Ballenpressvorganges auf dem Bediengerät 26 angezeigt. Als Einzelbeispiel ergibt sich gemäß Fig. 7 für das betreffende Material eine tatsächliche Materialfeuchte von 40%. Bei Bedarf kann natürlich auch die laufende Feuchtemessung des zugeführten Halmgutes Online angezeigt und/oder zur GPS Kartierung der Feuchte genutzt werden. Zu geringe Anpresskraftwerte auf das Messgut werden dem Bediener signalisiert, der gegebenenfalls die Halmgutzufuhr erhöht und/oder die Anpresskraft der Presszinken 36 erhöht, was auch automatisch erfolgen kann.

Das in Figur 3 dargestellte Ausführungsbeispiel unterscheidet sich von dem Ausführungsbeispiel gemäß Fig.1 und 2 dadurch, dass der Feuchtesensor 49 fest mit dem Förderkanalboden 21 verbunden ist und die Anpresskraftmessung durch eine Kraftmessdose 50 erfolgt, welche einenends am Hebelarm 51 der Presszinken 52 angeordnet und anderenends mit einer Zugfeder 53 verbunden ist, welche die Anpresskraft der Presszinken 52 erzeugt, mit der diese das Halmgut auf den Feuchtesensor 49 drücken. Ansonsten entspricht die Arbeitsweise der in Fig, 1 und Fig. 2 dargestellten Messeinrichtung.

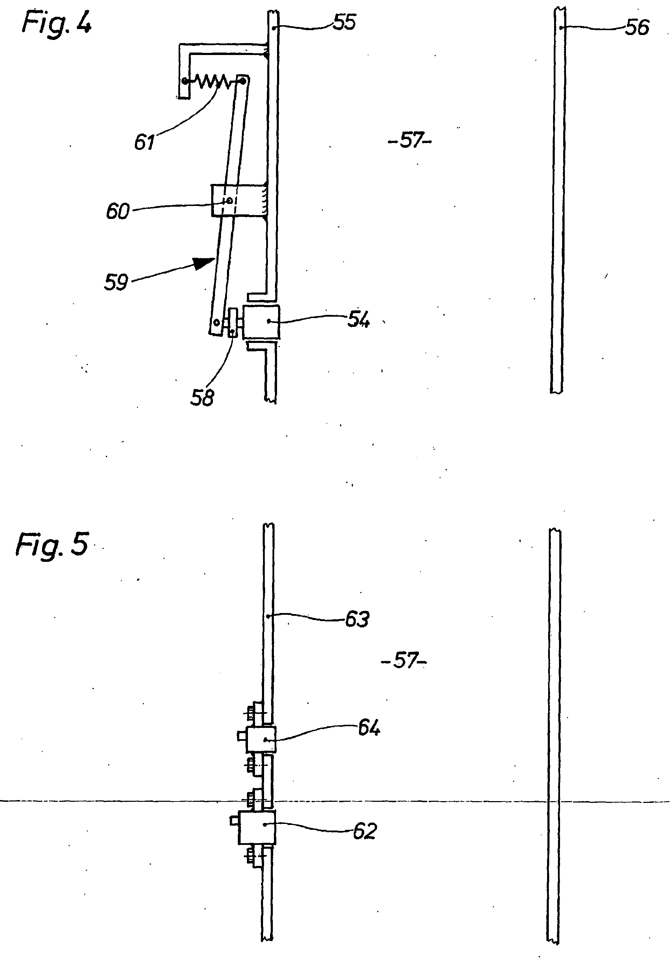

Bei dem Ausführungsbeispiel gemäß Figur 4 ist der Feuchtesensor 54 in der Seitenwand 55 der Rundballenpresse oder einer Quaderballenpresse angeordnet und misst somit am verdichteten Ballenstrang, der sich zwischen den Seitenwänden 55, 56 befindet und mit der Zahl 57 gekennzeichnet ist. Der Feuchtesensor 54 durchdringt eine Öffnung in der Seitenwand 55 und ist verschiebbar in der Öffnung gelagert. Der Feuchtesensor 54 ist über eine Kraftmessdose 58 mit einem zweiarmigen Hebel 59 verbunden. Der zweiarmige Hebel 59 ist schwenkbar in einer an der Seitenwand 55 befestigten Lagerung 60 angeordnet und an dem dem Feuchtesensor 54 abgewandten Hebelarmende mit einer Zugfeder 61 verbunden, die den Feuchtesensor 54 mit voreinstellbarer Kraft gegen den Ballenstrang 57 drückt. Die gemessenen Wertepaare (F, Qr) vom Feuchtesensor 54 und von der Kraftmessdose 58 werden in gleicher Weise verarbeitet wie bei den vorherbeschriebenen Ausführungsformen.

Da auch am verdichteten Pressstrang 57 bzw. am Rundballen je nach Befüllung Dichteunterschiede vorhanden sind, lässt sich die Genauigkeit der Feuchtemessung durch die erfindungsgemäße Messeinrichtung und das Messverfahren erheblich verbessern.

Bei der in Figur 5 dargestellten Ausführungsform durchdringt der Feuchtesensor 62 eine erste Öffnung in der Seitenwand 63 und in unmittelbarer Nähe davon durchsetzt ein Anpresskraftsensor 64 die Seitenwand 63. Beide Sensoren 62, 64 sind an der Seitenwand 63 befestigt. Vorteilhaft ist hierbei die Verwendung handelsüblicher Sensoren 62, 64 und die einfache Montage. Voraussetzung für die erfindungsgemäße Funktion sind jedoch gleiche Anpressverhältnisse auf beiden Sensoren 62, 64.

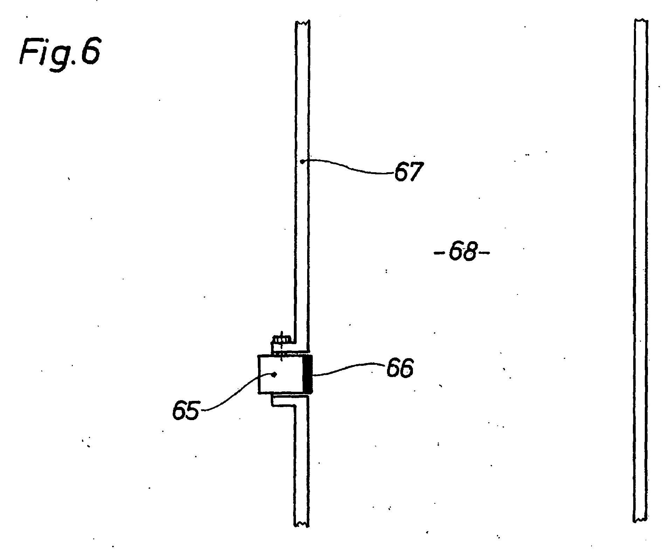

Das in Fig. 6 gezeigte Ausführungsbeispiel zeigt einen Feuchtesensor 65 mit einer kraftsensitiven Oberfläche 66, der in der Seitenwand 67 fest montiert ist und sich durch eine wenigstens gleichgroße Öffnung in den Pressraum 68 oder den Presskanal erstreckt.

Die erfindungsgemäßen Messeinrichtungen können somit uneingeschränkt an allen gewünschten Messstellen einer Erntemaschine sowohl am unbearbeiteten Erntegut als auch am fertigen Produkt (Ballen) eingesetzt werden. Darüber hinaus ist aber auch eine Ausgestaltung als Handmessgerät mit eigener Energieversorgung möglich, so dass auch lose Schüttgüter oder unverdichtetes Haufwerk messbar ist. Als Anpresskraft wäre die Handkraft durch einen Kraftaufnehmer zu messen. Bei Erreichen voreinstellbarer Anpresskräfte erfolgt dann automatisch die Feuchtemessung -auswertung und -anzeige.

## Patentansprüche

1. Messeinrichtung zur Messung des Feuchtegehaltes von landwirtschaftlichen Erntegütern wie Heu, Stroh oder Anwelksilage mit einem Feuchte-Sensorelement (22, 49, 54, 62, 65) und wenigstens einem weiteren Sensorelement zur Erfassung anderer Materialeigenschaften, **dadurch gekennzeichnet, dass** das weitere Sensorelement (23, 50, 58, 64, 66) zum Messen der von dem Messgut auf das Feuchte-Sensorelement (22, 49, 54, 62, 65) ausgeübten Anpresskraft oder einer dieser Anpresskraft entsprechenden Kraft an einer anderen Messstelle dient.

2. Messeinrichtung nach Anspruch 1, **dadurch gekennzeichnet, dass** das Sensorelement ein Kraftsensor (23) ist, auf dem sich das Feuchte-Sensorelement (22) abstützt.

3. Messeinrichtung nach Anspruch 1, **dadurch gekennzeichnet, dass** das Sensorelement als kraftsensitive Oberfläche (66) auf dem Feuchte-Sensorelement (65) angeordnet ist.

4. Messeinrichtung nach Anspruch 1, **dadurch gekennzeichnet, dass** das Sensorelement als Kraftsensor (64) ausgebildet ist, der separat von dem Feuchte-Sensorelement (62) an einer Messstelle mit gleichen Anpressverhältnissen des Messgutes angeordnet ist.

5. Messeinrichtung nach einem der vorhergehenden Ansprüche, **dadurch gekennzeichnet, dass** das Messgut mit wenigstens einer Presseinrichtung (24) mit zusätzlicher Kraft direkt oder indirekt auf das Feuchte-Sensorelement (22, 49, 54) gedrückt wird.

6. Messeinrichtung nach einem oder mehreren der vorhergehenden Ansprüche, **dadurch gekennzeichnet, dass** das Feuchte-Sensorelement (54) selbst als Presseinrichtung für das Messgut ausgestaltet und beweglich angeordnet ist.

7. Messeinrichtung nach einem der Ansprüche 1 und 4 bis 6, **dadurch gekennzeichnet, dass** die Anpresskraft der Presszinken (52) auf das Messgut durch einen Sensor (50) gemessen wird.

8. Messeinrichtung nach einem der Ansprüche 5 bis 7, **dadurch gekennzeichnet, dass** die Presseinrichtung (24) einen weitgehend konstanten Pressdruck auf das Messgut ausübt.

9. Messeinrichtung nach einem oder mehreren der vorhergehenden Ansprüche, **dadurch gekennzeichnet, dass** die Sensorelemente (22, 49, 54, 62, 65, 23, 50, 58, 64, 66) an einer Stelle des Weges des Erntegutes durch eine fahrbare landwirtschaftliche Erntemaschine wie Ballenpresse, Feldhäcksler, Mähdrescher, Mähmaschine oder Heuwerbungsmaschine angeordnet sind.

10. Messeinrichtung nach einem oder mehreren der vorhergehenden Ansprüche, **dadurch gekennzeichnet, dass** die Sensorelemente (22, 23, 49) in einem einer Pick-up Trommel (17) nachgeschalteten Förderkanal (18) angeordnet sind.

11. Messeinrichtung nach einem oder mehreren der vorhergehenden Ansprüche, **dadurch gekennzeichnet, dass** die Sensorelemente (54, 58, 62, 64, 65, 66) im Bereich des Pressraumes (57, 68) einer Rundballenpresse angeordnet sind.

12. Messeinrichtung nach einem oder mehreren der vorhergehenden Ansprüche, **dadurch gekennzeichnet, dass** die Sensorelemente (54, 58, 62, 64, 65, 66) im Bereich des Vorpresskanals oder des Presskanales einer Kolbenstrangpresse angeordnet sind.

13. Messeinrichtung nach Anspruch 12, **dadurch gekennzeichnet, dass** ein Anpresskraft-Sensorelement direkt oder indirekt mit einem Druck-/ Dichtefühler im Vorpresskanal einer Kolbenstrangpresse kombiniert ist oder in dessen unmittelbarer Umgebung angeordnet ist.

14. Messeinrichtung nach einem oder mehreren der vorhergehenden Ansprüche, **dadurch gekennzeichnet, dass** die Sensorelemente (22, 23, 49, 50, 54, 58, 62, 64, 65, 66) mit einer Steuereinheit (25) in Wirkverbindung stehen, welche als Mensch-Maschine Schnittstelle (26) wenigstens ein Display für den Feuchtegehalt des Messgutes aufweist.

15. Messeinrichtung nach Anspruch 14, **dadurch gekennzeichnet, dass** die Steuereinheit (25) wenigstens einen Speicher aufweist mit wenigstens einer Kalibrierfläche (47) zum Zuordnen der Messwertpaare von Feuchterohwert (Qr) und Kraft (F) zu einem kalibrierten Feuchtemesswert (Q).

16. Messeinrichtung nach Anspruch 14 und 15, **dadurch gekennzeichnet dass** für unterschiedliche Gutarten oder - strukturen wie Stroh, Heu, Luzerne, Silage, Maisstroh unterschiedliche Kalibrierflächen hinterlegt sind, die manuell über eine Mensch-Maschine Schnittstelle (26) oder über einen weiteren Gutartsensor (31) vorwählbar oder automatisch zugreifbar sind.

17. Messeinrichtung nach einem oder mehreren der vorhergehenden Ansprüche 14 bis 16, **dadurch gekennzeichnet, dass** die Steuereinheit (25) keine Signale des Feuchte-Sensorelementes (22, 49, 54, 62, 65) unterhalb eines vorbestimmbaren Kraftmesswertes des Sensorelementes (23, 50, 58, 64, 66) auswertet, so dass auch erkennbar ist, ob sich Messgut im Messbereich des Feuchte-Sensors (22, 49, 54, 62, 65) befindet oder nicht.

18. Messeinrichtung nach einem oder mehreren der vorhergehenden Ansprüche, **dadurch gekennzeichnet, dass** die Steuereinheit (25) automatisch Sensorsignale auswertet, wenn vorbestimmbare Kraftmesswerte des Sensorelementes (23, 50, 58, 64, 66) erreicht oder überschritten werden.

19. Messeinrichtung nach einem oder mehreren der vorhergehenden Ansprüche 14 bis 18, **dadurch gekennzeichnet, dass** die Anpresskraft auf das Messgut in Abhängigkeit von den Materialeigenschaften des Messgutes und/oder in Abhängigkeit von der durch einen Sensor (23, 50, 58) gemessenen Anpresskraft steuer- oder regelbar ist oder durch den Bediener vorgebbar ist.

20. Messeinrichtung nach einem oder mehreren der vorhergehenden Ansprüche, **dadurch gekennzeichnet, dass** das Feuchte-Sensorelement (22, 49, 54, 62, 65) nach bekannten Feuchtemessverfahren wie Leitfähigkeitsmessung, kapazitive Messung oder nach dem Mikrowellenmessverfahren arbeitet.

21. Messeinrichtung nach einem oder mehreren der vorhergehenden Ansprüche, **gekennzeichnet durch** eine Ausgestaltung als mobiles Handmessgerät mit eigener Energieversorgung.

22. Verfahren zur Messung von Eigenschaften eines Messgutes in einer Messeinrichtung gemäß einem der vorhergehenden Ansprüche, **dadurch gekennzeichnet, dass** der tatsächliche Feuchtegehalt (Q) des Messgutes aus der Kombination der gemessenen Feuchterohwerte (Qr) mit den gleichzeitig gemessenen Anpresskraftwerten (F) abgeleitet wird.

23. Verfahren nach Anspruch 22, **dadurch gekennzeichnet, dass** der tatsächliche Feuchtegehalt mittels einer Kalibrierfläche (47) festgestellt wird, welche aus gemessenen und errechneten Feuchterohwerten zwischen den gemessenen besteht.

24. Verfahren nach Anspruch 22 oder 23, **dadurch gekennzeichntet, dass** bei der Kalibrierflächenerstellung einem bekannten Feuchtegehaltswert Q des Messgutes Wertepaare zugeordnet werden, bestehend aus dem mit dem Feuchtesensor (22, 49, 54, 62, 65) gemessenen Feuchterohwert Qr und dem mit dem Kraftsensor (23, 50, 58, 64, 66) gemessenen Anpresskraftwert (F) .

## Claims

1. Measuring device for measuring the moisture content of agricultural harvested crops, such as hay, straw or wilted silage, with a moisture sensor element (22, 49, 54, 62, 65) and at least one further sensor element for detecting other properties of the material, **characterised in that** the further sensor element (23, 50, 58, 64, 66) serves to measure the contact force exerted by the material to be measured on the moisture sensor element (22, 49, 54, 62, 65) or a force corresponding to this contact force at some other measuring point.

2. Measuring device according to claim 1, **characterised in that** the sensor element is a force sensor (23) on which the moisture sensor element (22) is supported.

3. Measuring device according to claim 1, **characterised in that** the sensor element is arranged as a force-sensitive surface (66) on the moisture sensor element (65).

4. Measuring device according to claim 1, **characterised in that** the sensor element is constructed as a force sensor (64), which is arranged separately from the moisture sensor element (62) at a measuring point with identical pressing conditions of the material to be measured.

5. Measuring device according to one of the preceding claims, **characterised in that** the material to be measured is pressed by at least one pressing device with additional force directly or indirectly on to the moisture sensor element (22, 49, 54).

6. Measuring device according to one or more of the preceding claims, **characterised in that** the moisture sensor element (54) itself is configured as pressing device for the material to be measured and arranged as movable.

7. Measuring device according to one of claims 1 and 4 to 6, **characterised in that** the contact force of the pressing prongs (52) on the material to be measured is measured by a sensor (50).

8. Measuring device according to one of claims 5 to 7, **characterised in that** the pressing device (24) exerts a largely constant contact pressure on the material to be measured.

9. Measuring device according to one or more of the preceding claims, **characterised in that** the sensor elements (22, 49, 54, 62, 65, 23, 50, 58, 64, 66) are arranged at a point of the path of the harvested crop through a mobile agricultural harvesting machine such as a baling press, chopper forage harvester, combine-harvester, mowing machine or hay-making machine.

10. Measuring device according to one or more of the preceding claims, **characterised in that** sensor elements (22, 23, 49) are arranged in a conveying channel (18) connected downstream of a pick-up drum (17).

11. Measuring device according to one or more of the preceding claims, **characterised in that** sensor elements (54, 58, 62, 64, 65, 66) are arranged in the area of the pressing chamber (57, 68) of a round baler.

12. Measuring device according to one or more of the preceding claims, **characterised in that** sensor elements (54, 58, 62, 64, 65, 66) are arranged in the area of the pre-pressing channel or the pressing channel of a piston rod press.

13. Measuring device according to claim 12, **characterised in that** a contact force sensor element is combined directly or indirectly with a pressure/density sensor in the pre-pressing channel of a piston rod press or is arranged in the immediate vicinity thereof.

14. Measuring device according to one or more of the preceding claims, **characterised in that** sensor elements (22, 23, 49, 50, 54, 58, 62, 64, 65, 66) are in active connection with a control unit (25) which as a man-machine interface (26) has at least one display for the moisture content of the material to be measured.

15. Measuring device according to claim 14, **characterised in that** the control unit (25) has at least one memory with at least one calibrating surface (47) for allocating the measuring value pairs of rough moisture value (Qr) and force (F) to a calibrated measured moisture value (Q).

16. Measuring device according to claim 14 and 15, **characterised in that** for different types or textures of material, such as straw, hay, alfalfa, silage, corn stalks, different calibrating surfaces are filed, which can be preselected manually via a man-machine interface (26) or via a further material-type sensor (31) or automatically accessed.

17. Measuring device according to one or more of preceding claims 14 to 16, **characterised in that** the control unit (25) does not evaluate any signals of the moisture sensor element (22, 49, 54, 62, 65) below a predetermined force measured value of the sensor element (23, 50, 58, 64, 66), so it is also possible to identify whether material to be measured is in the measuring range of the moisture sensor (22, 49, 54, 62, 65) or not.

18. Measuring device according to one or more of the preceding claims, **characterised in that** the control unit (25) automatically evaluates sensor signals if predetermined force measured values of the sensor element (23, 50, 58, 64, 66) are reached or exceeded.

19. Measuring device according to one or more of preceding claims 14 to 16, **characterised in that** the contact force on the material to be measured can be controlled or regulated or preset by the operator as a function of the material properties of the material to be measured and/or as a function of the contact force measured by a sensor (23, 50, 58).

20. Measuring device according to one or more of the preceding claims, **characterised in that** the moisture sensor element (22, 49, 54, 62, 65) operates according to known moisture measuring methods such as conductivity measurement, capacitive measurement or according to the microwave measuring method.

21. Measuring device according to one or more of the preceding claims, **characterised by** a configuration as a mobile hand-measuring device with its own energy supply.

22. Method for measuring properties of a material to be measured in a measuring device according to one of the preceding claims, **characterised in that** the actual moisture content (Q) of the material to be measured is derived from the combination of measured rough moisture values (Qr) with the simultaneously measured contact force values (F).

23. Method according to claim 22, **characterised in that** the actual moisture content is established by means of a calibrating surface (47) consisting of measured and calculated rough moisture values between those measured.

24. Method according to claim 22 or 23, **characterised in that** during creation of the calibrating surface pairs of values consisting of the rough moisture value Qr measured by the moisture sensor (22, 49, 54, 62, 65) and the contact force value (F) measured by the force sensor (23, 50, 58, 66) are allocated to a known moisture content value Q of the material to be measured.

## Revendications

1. Dispositif de mesure destiné à mesurer le taux d'humidité des produits d'une récolte agricole comme le foin, la paille ou le silage préfané (« Anwelksilage » en allemand) avec un élément capteur d'humidité (22, 49, 54, 62, 65) et au moins un autre élément capteur destiné à détecter d'autres propriétés de matière,
**caractérisé en ce que** l'autre élément capteur (23, 50, 58, 64, 66) sert à mesurer la force de pression exercée par le produit mesuré sur l'élément capteur d'humidité (22, 49, 54, 62, 65) ou une force correspondant à cette force de pression en un autre point de mesure.

2. Dispositif de mesure selon la revendication 1, **caractérisé en ce que** l'élément capteur est un capteur de force (23), sur lequel s'appuie l'élément capteur d'humidité (22).

3. Dispositif de mesure selon la revendication 1, **caractérisé en ce que** l'élément capteur comme surface (66) sensible à la force est disposé sur l'élément capteur d'humidité (65).

4. Dispositif de mesure selon la revendication 1, **caractérisé en ce que** l'élément capteur est conçu comme un capteur de force (64), qui est disposé séparément de l'élément capteur d'humidité (62) en un point de mesure présentant les mêmes rapports de pression du produit à mesurer.

5. Dispositif de mesure selon l'une quelconque des revendications précédentes, **caractérisé en ce que** le produit à mesurer est pressé directement ou indirectement sur l'élément capteur d'humidité (22, 49, 54) avec au moins un dispositif de pression (24) (« Presseinrichtung » en allemand) doté d'une force additionnelle.

6. Dispositif de mesure selon l'une ou plusieurs des revendications précédentes, **caractérisé en ce que** l'élément capteur d'humidité (54) est conçu lui-même comme un dispositif de pression pour le produit à mesurer et disposé de manière mobile.

7. Dispositif de mesure selon l'une quelconque des revendications 1 et 4 à 6, **caractérisé en ce que** la force de pression des pointes de pression (52) (« Presszinken » en allemand) sur le produit à mesurer est mesurée par un capteur (50).

8. Dispositif de mesure selon l'une quelconque des revendications 5 à 7, **caractérisé en ce que** le dispositif de pression (24) exerce une force de pression sensiblement constante sur le produit à mesurer.

9. Dispositif de mesure selon l'une ou plusieurs des revendications précédentes, **caractérisé en ce que** les éléments capteurs (22, 49, 54, 62, 65, 23, 50, 58, 64, 66) sont disposés en un point du trajet du produit de la récolte à travers une moissonneuse agricole mobile comme un emballoteur (« Ballenpresse » en allemand), une récolteuse-hâcheuse (« Feldhäcksler » en allemand), une moissonneuse-batteuse, une faucheuse ou une faneuse (« Heuwerbungsmaschine » en allemand).

10. Dispositif de mesure selon l'une ou plusieurs des revendications précédentes, **caractérisé en ce que** les éléments capteurs (22, 23, 49) sont disposés dans un couloir d'alimentation (18) monté derrière un tambour ramasseur (17) (« Pick-up Trommel » en allemand).

11. Dispositif de mesure selon l'une ou plusieurs des revendications précédentes, **caractérisé en ce que** les éléments capteurs (54, 58, 62, 64, 65, 66) sont disposés dans la zone de l'espace de presse (57, 68) d'une ramasseuse-presse à balles rondes (« Rundballenpresse » en allemand).

12. Dispositif de mesure selon l'une ou plusieurs des revendications précédentes, **caractérisé en ce que** les éléments capteurs (54, 58, 62, 64, 65, 66) sont disposés dans la zone du couloir de prépressage ou du couloir de pressage d'une presse à extrusion (« Kolbenstrangpresse » en allemand).

13. Dispositif de mesure selon la revendication 12, **caractérisé en ce qu'**un élément capteur de force de pression est combiné directement ou indirectement à un capteur de pression/de densité dans le couloir de prépression d'une presse à extrusion ou est disposé dans ses zones avoisinantes directes.

14. Dispositif de mesure selon l'une ou plusieurs des revendications précédentes, **caractérisé en ce que** les éléments capteurs (22, 23, 49, 50, 54, 58, 62, 64, 65, 66) sont en liaison fonctionnelle avec une unité de commande (25), laquelle comprend comme interface homme-machine (26) au moins un affichage pour le taux d'humidité du produit à mesurer.

15. Dispositif de mesure selon la revendication 14, **caractérisé en ce que** l'unité de commande (25) comprend au moins une mémoire dotée au moins d'une surface de calibrage (47) destiné à associer les paires de valeur de mesure de la valeur brute d'humidité (Qr) et de la force (F) à une valeur mesurée d'humidité (Q) calibrée.

16. Dispositif de mesure selon les revendications 14 et 15, **caractérisé en ce que** pour différent(e)s produits ou structures agricoles comme la paille, le foin, la luzerne, le silage, la tige de maïs, différentes surfaces de calibrage sont enregistrées, lesquelles peuvent être présélectionnées ou auxquelles on peut accéder automatiquement manuellement par une interface homme-machine (26) ou par un autre capteur de produit (31).

17. Dispositif de mesure selon l'une ou plusieurs des revendications 14 à 16, **caractérisé en ce que** l'unité de commande (25) n'analyse aucun signal de l'élément capteur d'humidité (22, 49, 54, 62, 65) au-dessous d'une valeur de mesure de force pouvant être prédéfinie de l'élément capteur (23, 50, 58, 64, 66), de sorte qu'il est également possible de détecter si le produit à mesurer se situe ou non dans la zone de mesure du capteur d'humidité (22, 49, 54, 62, 65).

18. Dispositif de mesure selon l'une ou plusieurs des revendications précédentes, **caractérisé en ce que** l'unité de commande (25) analyse automatiquement les signaux de capteur lorsque les valeurs de mesure de force pouvant être prédéfinies de l'élément de capteur (23, 50, 58, 64, 66) sont atteintes ou dépassées.

19. Dispositif de mesure selon l'une ou plusieurs des revendications 14 à 18, **caractérisé en ce que** la force de pression sur le produit à mesurer peut être commandée ou réglée en fonction des propriétés de matière du produit à mesurer et/ou en fonction de la force de pression mesurée par un capteur (23, 50, 58) ou peut être prédéterminée par l'utilisateur.

20. Dispositif de mesure selon l'une ou plusieurs des revendications précédentes, **caractérisé en ce que** l'élément capteur d'humidité (22, 49, 54, 62, 65) fonctionne selon des procédés de mesure d'humidité connus comme une mesure de la conductivité, une mesure capacitive ou selon le procédé de mesure par micro-ondes.

21. Dispositif de mesure selon l'une ou plusieurs des revendications précédentes, **caractérisé en ce qu'**il est configuré comme un appareil de mesure portatif présentant sa propre alimentation en énergie.

22. Procédé de mesure des propriétés d'un produit à mesurer dans un dispositif de mesure selon l'une quelconque des revendications précédentes, **caractérisé en ce que** le taux d'humidité (Q) effectif du produit à mesurer est déduit de la combinaison des valeurs brutes d'humidité (Qr) mesurées avec les valeurs de force de pression (F) mesurées simultanément.

23. Procédé selon la revendication 22, **caractérisé en ce que** le taux d'humidité effectif est déterminé au moyen d'une surface de calibrage (47), laquelle est constituée des valeurs brutes d'humidité mesurées et calculées entre les valeurs mesurées.

24. Procédé selon la revendication 22 ou 23, **caractérisé en ce que**, pour établir les surfaces de calibrage, des paires de valeurs sont associées à une valeur de taux d'humidité Q connue du produit à mesurer, constituées de la valeur brute d'humidité Qr mesurée avec le capteur d'humidité (22, 49, 54, 62, 65) et de la valeur de force de pression (F) mesurée avec le capteur de force (23, 50, 58, 64, 66).
